# EUROPEAN PATENT APPLICATION

(11) **EP 4 578 594 A1**
(43) Date of publication of application: **02.07.2025**
(21) Application number: 24214858.3
(22) Date of filing: 22.11.2024
(51) Int. Cl.: B23K 37/04, B25B 5/00, B33Y 10/00, B33Y 80/00

(54) **METHOD FOR USING A FIXING ARRANGEMENT WITH A BASE ELEMENT, DEVICE FOR EXECUTING SUCH METHOD, FIXTURE, AND METHOD OF MANUFACTURING SUCH FIXTURE**

(30) Priority: 22.12.2023 US 202318395096
(71) Applicant: Sulzer Turbo Services Houston Inc., La Porte TX 77571 (US)
(72) Inventor: Arnold, Saunders Aloysius, Houston, 77054 (US)
(74) Representative: IPS Irsch AG

(57) **Abstract**

The present application relates to a method for using a fixing arrangement with a base element (1) for fixing a workpiece (8) in a welding process, which comprises the following steps: attaching a fixture (3) at a precision structure (2) of a work surface (111) of the base element (1), securing the workpiece (8) at the fixing arrangement by means of the fixture (3), wherein the fixture (3) is made by an additive manufacturing process.
The present application relates also to a device for carrying out such a method, a fixture, and to a method for producing such fixture.

## Description

The application refers to a method, and a device, for weld repair of machinery components. Specifically fixturing of workpieces to present them to a weld process. Especially an automated weld process.

Such fixing devices and methods have a wide variety of applications. They are used in general to locate and hold parts in machines repeatedly, especially in automated machines, for the welding process to work efficiently and effectively. In the state of the art, fixtures are designed to be placed and fixed on a worktable or precision table. Locating of fixturing typically requires indication of a sub plate, and then locating individual fixtures through dowel pins, bolts, or hook fits. Secured in this way, they then secure parts to weld them.

Due to the extreme heat than can occur during welding such machines, and their components, often operate in a harsh and demanding condition. Therefore, they must reliably perform for a prolonged time up to several years. For these reasons, the machines and their components are often very expensive and made from exceptional durable materials. Due to the expensive new purchase prices, ideally only a small number of parts should be replaced over the lifetime of these machines. Preferably, those replacements are only conducted if necessary. The majority of parts should be reused after refurbishment. The part that is replaced most is the fixture, as it needs to be adapted to each new type of workpiece to fix it appropriately. However, disassembly of such a fixing device is usually not easy. Due to the operation of the machines under harsh and challenging conditions. It is not uncommon for certain parts to be hot and very tightly stuck, so that they can only be released again with skill and considerable mechanical effort.

This work, the disassembly of the components of the fixing device, mainly the workpiece, is currently still performed manually by an operator. The same goes for the reassembly of the components.

The operator must automatically change his position when changing components of the fixing device. If another type of workpiece is to be processed, the operator must know how to process the other type of workpiece. This means that he must learn how to do it before processing a new workpiece for the first time. Normally, not only one operator is responsible for all processing. Therefore, in a company, several employees work on processing the workpieces and other components of fixing devices. Thus, each employee must be trained to process each possible component. One of the disadvantages of this is that such training takes a lot of time and effort. Furthermore, with different human operators, the same quality and standards are never achieved. The operators may be well trained, but two different operators will still perform the work differently, even if only slightly.

In addition, the operator faces many (health) risks throughout the manual processing of a fixing device and its components. Operator fatigue from handling tools and heavy components degrades the speed at which work can be performed. Fatigue can also increase the likelihood of mistakes made during the processing. Damage to a processed component, or a fixture, is not an uncommon proposition when work is performed manually. Under operation, vibration and impact can cause the tool to slip and damage property, damage components, or injure operators.

Traditionally, fixtures used in fixing devices have been manufactured from metallic materials. To fix the part that is to be welded properly, the fixtures of the state of the art are carved from metal blocks via subtractive manufacturing methods such as CNC-milling, CNC-turning, EDM, or ECM. The use of fixtures manufacturing by metal casting is also known from the state of the art.

The drawback of such manufacturing methods for fixtures is that those processes take a lot of time and require expensive materials, rendering them inefficient. Especially in case one of the fixtures breaks and needs to be replaced. This can quickly lead to a standstill of the manufacturing process for the time a replacement is being made. Not only is the braking of a fixture problematic, the need to exchange the fixtures in order to weld a different shaped workpiece is equivalent to standstill and a loss of time.

The state of the art also uses clamps and stops to hold parts in place, of which there are two types. Traditional clamps and stops are inexpensive but cannot be accurately removed and replaced on a precision table. The other type, precision and specialty clamps and stops, are expensive.

To overcome these problems, a method for using a fixing arrangement with a base element for fixing a workpiece in a welding process is proposed, alongside a device for using such a method.

The method comprises the following steps:
A fixture is attached at a precision structure of a work surface of a base element. In the next step, a workpiece is secured at the fixing arrangement by means of the fixture, wherein the fixture used is made by an additive manufacturing process.

By using an additive manufacturing process according to the invention, to produce a fixture or a multitude of fixtures, a cheaper, faster, and more precise fixture can be produced, than those known from the state of the art.

Additive manufacturing processes, such as Fused Deposition Modeling (FDM), also known as Fused Filament Fabrication (FFF), or Stereolithography (SLA), also known as vat polymerization, can be used to design and manufacture fixtures which precisely locate components in relation to the welding process. Binder Jetting, also known as powder bed, ink jetting, or drop on powder, and Selective Laser Melting (SLM) can be used as well.

Additive manufacturing brings especially two advantages to the economic side of manufacturing fixtures for welding.

First, additive manufacturing according to the invention can be conducted in less time than for example CNC-milling. Therefore, the fixtures can be made on demand without leading to long stand stills of the manufacturing process, as it is the case with CNC-milling or other subtractive manufacturing processes.

Second, additive manufacturing according to the invention is much cheaper than the substrative manufacturing processes known from the state of the art. Therefore, it is possible to produce a bigger stock of spare fixtures and fixture parts without increasing the budget. Of course, it is also possible to increase the mentioned stock while simultaneously decreasing cost.

Additive manufacturing, according to the invention, allows a simple and easy use of component materials to produce the fixtures. Material used can be easily adapted to the requirements set out by different welding processes and work environments , as well as the specific workpiece and its requirements.

It is also possible to build modular fixtures, according to the invention, wherein each fixture comprises several sub-modules. This provides the advantage that fixture parts can be easily exchanged in case they are broken, or a different workpiece must be fixed, without the need for exchanging the whole fixture. By doing so, not only material and time can be saved, but also energy which would be needed to produce new fixtures. Naturally, this is equivalent to a more economic, and ecologic, method of and apparatus for welding than the ones known from the state of the art.

For example, it is possible to build an electrically conductive structure within the fixture. The chief function of this feature is to ground the workpiece. Grounding being a requirement of arc welding. Additionally, an electrically conductive structure will work to prevent shorting between components of the device. Of course, other composite fixtures are possible wherever needed. For example, fixtures using printed structures and metal inserts in areas where high-wear, high-temperature, high movements, or other extreme conditions such as high or low PH values occur.

Composites made of different plastics and or coated fixtures are also possible. Coatings and materials may be used to adapt to special environments, or specific requirements, such as extreme UV resistance, or low friction for example.

Fixtures, and parts in general, which according to the invention, are made by additive manufacturing require far less post processing than fixtures and parts made by subtractive methods such as CNC-milling. In turn this saves time, money, energy, and resources. Here, it is also possible to strengthen the fixture and simultaneously save material using honeycomb structures or similar structures known to improve the weight to structural-integrity ratio, such as bone structures for example. Besides material and time this allows to save energy which other ways would be needed in production.

Additionally, the use of structures such as honeycomb structures allows the manufacturing of closed internal structures within the fixture. Those structures are known for being strong, despite being hollow, and save significant material and energy during production, and later during handling in the process. Lighter structures do not require as much energy to be moved as heavier structures. Consequently, they reduce wear on the parts which lift them or are in any other contact with them, and therefore contribute to a prolonged lifetime of those components. Reduced wear allows, therefore, to save time and money which otherwise would be needed to maintain and repair the components in question. Additive manufacturing also provides a solution for another problem that occurs during fixing of components. To tightly fix a component/workpiece, the workpiece needs to be locked in place by a holding device, which is typically made out of metal in the state of the art. Those metal holding devices may damage workpieces during the fixation. Hence, most metal holding devices are coated to protect the workpiece. Those coating often need to be replaced several times, because they wear down, leading to shortened maintenance intervals.

Additive manufactured fixtures and holding devices do not need to be coated in such a protecting material, since they can be made to meet the specific degree of hardness to not damage the workpiece. Moreover, since most of the additive manufactured fixtures are made of plastics, they won't damage the workpiece.

It is also possible to build fixtures that are made not only of a composite material, but of different material. Hence, different parts of the fixture, having to meet different requirements, can be made of different materials.

It is also possible to use additive manufacturing processes, such as Powder Bed Fusion or selective laser melting, to produce metal fixtures if required for the workpiece or the production process.

By using additive manufactured fixtures, according to the invention, the temperature management during the welding process can be controlled better. Since metal is known to be an excellent thermal conductor, heat-management is always a concern during welding processes, since the heat produced by the welding transfers via a metallic fixture directly to the rest of the welding arrangement. Hence, the whole arrangement needs to be protected against heat, or needs to be made of expensive heat resistant materials. By using an already cheap and practical additive manufactured fixture, the conduction of heat can be precisely planned and minimized. The selected material provides further savings since the rest of the welding arrangement does not need to be protected from the heat.

Dynamic features, such as an integrally printed clamp, to fix the workpiece can be easily produced with additive manufacturing according to the invention. In contrast to the impossibility to do so with subtractive manufacturing known from the state of the art.

Another important factor in saving resources, such as time, material, money, and energy, is automatization. By providing a welding arrangement and a method of using the welding arrangement according to the invention in an automated manner, several advanced effects can be achieved.

The following embodiments are meant to describe selected, but not limited methods and arrangements according to the invention. It goes without saying that each of the embodiments is a non-limiting example of the use of the method, and the arrangement, according to the invention. The combination of features of different embodiments is therefore readily thought of and explicitly enclosed within the scope of the teaching of this application.

In an embodiment of the method, a fixing arrangement with a base element for fixing a workpiece in a welding process is proposed, alongside a device for using such a method, wherein a fixture is attached at a precision structure of a work surface of a base element. In another step, a workpiece is secured at a fixing arrangement by means of the fixture, wherein the fixture is made by an additive manufacturing process.

In an embodiment of the method, the fixture comprises a surface A, and a docking element for attaching the fixture at the precision structure, wherein the docking element is located on surface A.

In an embodiment of the method, the fixture comprises a surface B, and a securing element for attaching the workpiece to the fixture, wherein the securing element is located on surface B.

In an embodiment of the method, the workpiece comprises a holding element for holding onto the fixture.

In another embodiment, the securing element is a printed press-fit pin, which is produced to interjoin with the holding element of the workpiece, where they can be secured due to the clearance between the securing element and the holding element. This clearance is between 0.05 mm and 0.1 mm in diameter, preferably between 0.06 mm and 0.09 mm in diameter, especially preferable between 0.065 mm and 0.085 mm.

Of course, it is possible to use metal press-fit pin as a securing element. Or a mix of a metal press fit pin and a printed press-fit pin as securing elements.

Where a metal press-fit pin and/or a printed press-fit pin is used as securing element, it goes without saying, that the clearance between the securing element and the holding element is also between 0.05 mm and 0.1 mm. Preferably the clearance is between 0.06 mm and 0.09 mm in diameter, and especially preferable between 0.065 mm and 0.085 mm in diameter.

In an embodiment of the method according to the invention, the docking element is a printed press-fit pin, which is produced to interjoin with the precision structure of the base element. It can be secured due to the clearance between the docking element and the precision structure. This clearance is between 0.05 mm and 0.1 mm, preferably between 0.06 mm and 0.09 mm in diameter, especially preferable between 0.065 mm and 0.085 mm.

It is possible to use a metal press-fit pin as docking element, or a mix of a metal press fit pin and a printed press-fit pin as docking element.

Where a metal press-fit pin and/or a printed press-fit pin is used as docking element, it goes without saying, that the clearance between the docking element and the precision structure is also between 0.05 mm and 0.1 mm in diameter. Preferably the clearance is between 0.06 mm and 0.09 mm in diameter, and especially preferable between 0.065 mm and 0.085 mm.

In an embodiment of the method according to the invention the securing element comprises a spherical surface and/or plane surface. This is particular advantageous to fit the workpiece precisely and tightly to the fixture.

In an embodiment of the method according to the invention, the angle between surface A and surface B is between 0 and 360 degrees, preferably between 0 and 270 degrees, and especially preferably between 0 and 180 degrees. This allows the use of more complex structures to fit the workpiece precisely and tightly to the surface B and the securing element, as well as surface B and the docking element to the base element.

An advantageous aspect of the method according to the invention is that the angle between surface A and surface B can vary throughout the surfaces A and B. This allows the use of more complex structures to fit the workpiece precisely, and tightly, to the surface B and the securing element, as well as surface B and the docking element to the base element.

In an embodiment of the method according to the invention, the fixing element comprises a spherical surface and/or a plane surface. This is particular advantageous to fit the workpiece precisely and tightly to the fixture.

It goes without saying, that the different components which are interjoined according to the invention, e.g., the precision structure, the docking element, the securing element, and the holding element are not limited to the structure of press fit pins and corresponding holes, grooves, or wells. The above-mentioned components can be designed in any suitable form which allows it to join them. This encloses any procedure and structure known to the person skilled in the art to join two elements.

An advantageous aspect of the method according to the invention is that the fixture can be a solid block of material. Structural integrity necessary to conduct the method can be achieved in this manner.

Another advantageous aspect of the method according to the invention is that the fixture can be made of a flexible material since additive manufacturing methods allow the use of several materials to meet the structural, and physical, requirements needed for specific tasks.

This includes, but is not limited to requirements such as stiffness, heat resistance, tightness, electric conductivity, UV resistance, and water proofness.

Another advantageous aspect of the method according to the invention is, that the fixture can comprise a hole and/or gap to save material.

As already mentioned, it is also possible to use fixtures made from compound material to make use of the advantages of such material.

Another advantageous aspect of the method according to the invention is that the fixture can be built to mask parts of the workpiece. Masking is in order to protect the workpiece during the welding process.

Yet another advantageous aspect of the method according to the invention is that the welding process can be automated, as well as the assembly and disassembly of the fixing arrangement. This leads directly to the above-described positive effects regarding the safety of the operator, the speed, efficiency, and quality of production as well as the economic improvements derived from those.

Yet another advantageous aspect of the method according to the invention is, that the connection between the base element and the fixing element and the connection between the fixing element and the workpiece is shear resistant. This means that connections which do not consist of a single round structure are suitable to face any forces that can be expected during operation of the specific process without breaking. Thereby the elements ensure that the involved parts are held together tight and firm.

Another advantageous aspect of the method according to the invention is, that each of the connections between the base element, the fixing element, and the workpiece is reversible. This allows easy reuse of parts, and provides possibilities to save resources, since broken components can be exchanged without the need to replace the whole device.

Hence, all components of the fixing arrangement are designed and designated to be used several times.

Another advantageous aspect of the method according to the invention is that the fixture can be designed to be a sliding clamp. Such a sliding clamp comprises a U-shaped stationary part, comprising a stationary bracket. The sliding clamp also comprises a sliding bracket. Both sliding bracket and stationary bracket comprise a clamping surface between which a workpiece can be fixed. By moving the sliding bracket towards the stationary bracket, the grip on the workpiece can be tightened. In the same manner, the grip can be loosened, by moving the sliding bracket away from the stationary bracket. The use of a sliding clamp as fixture especially allows the working on big and small workpieces. Some workpieces may be too big or heavy to be securely fixed by the fixtures as described above. Other workpieces may be too small to be gripped and secured precisely by the above-described fixtures. A sliding clamp gives the advantage that such workpieces can be gripped, and fixed safely and precisely.

The use of clamps that have been made by an additive manufacturing process adds all the positive effects discussed above to the method and the device for using the method according to the invention.

An advantageous aspect of the method according to the invention is that one or more of the sliding clamps can comprise a precision pin to fix the workpiece even tighter and protect the clamp surface from wear. Some parts also require a tangent surface to be fixed accurately. For example, fir tree roots on turbine blades. By using precision pins in the clamp, a fir tree root, or similar structure, can be fixed accurately with tangential surfaces. Precision pins further have the advantage that they can be fitted in an easily replaceable manner. Therefore, it is possible to adjust the sliding clamp very fast and easily to new types of workpiece to be welded during the process.

According to an advantageous aspect of the method according to the invention, it is possible to provide recesses in the sliding clamp in which magnets can be placed. The magnets in turn hold the precision pins, or any other ferrous structure, in place. In a particularly advanced embodiment those magnets are electromagnets to ensure a secured fixation during operation and an easy disassembly of the precision pins to change the workpiece, by switching the electromagnets on or off. Of course it is possible to only use one magnet placed in a recess to secure a precision pin.

An advantageous aspect of the invention is the use of a locating pin to ground the workpiece and simultaneously ensure the correct positioning of the workpiece within the sliding clamp. The grounding, being necessary to the process of arc welding, also prevents shorting in an undesirable location which can occur during welding. Shorting is both a security risk as wells as a threat to the workpiece, its quality, and the entire device.

The ensuring of the correct position of the workpiece helps to provide consistently high quality in the product. Correct positioning also prevents damage on the device or its components due to a suboptimal fixation of the workpiece.

An advantageous aspect of the invention is the use of a dovetail to slide the sliding bracket near and away from the stationary bracket. Although any other known sliding mechanism is suitable to conduct this action, a dovetail is especially preferred, due to its easy assembly and disassembly alongside its reliability and longevity. The sliding bracket is capable of being the male and the female part of the dovetail, as well as the stationary bracket. However, it is preferred, due to an easier maintenance and assembly, if the sliding bracket comprises the female dovetail and the stationary bracket comprises the male dovetail. Dovetails may also be printed in situ.

An advantageous aspect of the invention is the use of a drive element to move the sliding bracket towards the stationary bracket. Preferably, the drive element is a screw inserted in the sliding clamp, which, when rotated, drives the sliding bracket towards the stationary bracket.

An advantageous aspect of the invention is the use of a protecting patch to protect the sliding bracket from wear by the drive element of the sliding clamp. Preferably such a protecting patch is also made by an additive manufacturing process, and fitted for the environment in which the method is applied. Especially preferable, the protecting patch is printed resin and rubber tape.

To further protect the fixture and increase its longevity, the insert through which the drive element drives the sliding bracket according to the invention, is threaded.

Another advantageous aspect of the invention is that one or multiple fixtures is/are fixed on a plate, which in turn is fixed on the base element.

Furthermore, a device for executing the method according to the invention is provided, comprising a fixture, and a base element with a work surface. The work surface comprises a precisions structure, wherein the precision structure of the base element can be interjoined with the fixture. Hence, fixing the fixture to the base element. A workpiece can be arranged on the fixture and tightly, and securely, fixed to it. This leads to a firm and removeable fixing of the workpiece to the base element via the fixture. By doing so a secure handling of the workpiece is allowed before, during, and after the welding process.

In an advantageous embodiment of the device for executing the method according to the invention, the fixture comprises a surface A and a docking element for attaching the fixture at the precision structure. The docking element is located on surface A. The docking element is designed to fit precisely and tightly to the precision structure of the work surface.

In an advantageous embodiment of the device for executing the method according to the invention, the fixture comprises a surface B, and a securing element for attaching the workpiece to the fixture. The securing element is located on surface B. The securing element is designed to fit into the workpiece precisely and tightly.

In an advantageous embodiment of the device for executing the method according to the invention, the workpiece comprises an element for holding onto the fixture.

The holding element is designed to fit precisely and tightly to the securing element of the fixture.

Furthermore, a fixture for a device, for performing a method according to the invention is disclosed. The device is characterized in that the fixture is made by an additive manufacturing process. Thereby benefitting from all the above-mentioned improvements.

In an advantageous embodiment of the fixture for a device for performing the method according to the invention the fixture comprises a surface A and a docking element. The docking element is for attaching the fixture at the precision structure. The docking element is located on surface A.

In an advantageous embodiment of the fixture for a device for performing the method according to the invention the fixture comprises a surface B, and a securing element for attaching the workpiece to the fixture. The securing element is located on surface B.

In an advantageous embodiment of the fixture for a device for performing the method according to the invention in a welding process, wherein the fixture comprises a surface A with a docking element, and a surface B with a securing element. A precision structure of a base element is interjoinable with the docking element of surface A, and the securing element of surface B can be interjoined with a holding element of the workpiece. In this manner the workpiece is fixed precisely.

This allows the fixture to securely hold and fix the workpiece during the welding process, as well as easy assembly and disassembly of the device.

In an advantageous embodiment of the fixture for a device for performing the method according to the invention the securing element, and/or the docking element is a printed press-fit pin or a metal press-fit pin. The use of press fit pins allow a precise connection, specifically made for each workpiece, as well as easy assembly and disassembly of the device.

In an advantageous embodiment of the fixture for a device for performing the method according to the invention, the securing element and/or the docking element, comprises a spherical surface and/ or a plane surface. A spherical or plane surface allowing a precise connection, specifically made for each workpiece, as well as easy assembly and disassembly of the device.

In an advantageous embodiment of the fixture for a device for performing the method according to the invention, surface A and B stand at a predeterminable angle to each other, allowing a precise connection, specifically made for each workpiece.

In an advantageous embodiment of the fixture for a device for performing the method according to the invention, the angle between surface A und surface B is between 0 and 360 degrees, preferably between 0 and 270 degrees and especially preferably between 0 and 180 degrees.

In an advantageous embodiment of the fixture for a device for performing the method according to the invention the angle between surface A and surface B varies across surface A and surface B. The variation allows complicated structures as surfaces A and B, as well as easy assembly and disassembly of the device.

In an advantageous embodiment of the fixture for a device for performing the method according to the invention the surface B and/or surface A comprises a spherical surface and/ or a plane surface. A spherical or plane surface allowing a precise connection, specifically made for each workpiece, as well as easy assembly and disassembly of the device.

In an advantageous embodiment of the fixture for a device for performing the method according to the invention, the fixture is a solid block of material.

In an advantageous embodiment of the fixture for a device for performing the method according to the invention the fixture is flexible, to allow easy assembly and disassembly of the device, and additionally prevent the workpiece from damage.

In an advantageous embodiment of the fixture for a device for performing the method according to the invention, the fixture is stiff, allowing heavy workpieces to be handled, without deformation of the fixture. Thereby ensuring precise welding of the workpiece.

In an advantageous embodiment of the fixture for a device for performing the method according to the invention, the fixture comprises a hole and/or a gap to save on material.

In an advantageous embodiment of the fixture for a device for performing the method according to the invention the fixture is made of a composite material. The fixture may also mask a portion of the workpiece. This allows the fixture to benefit from the advantages of compound material in terms of efficiency, durability, as well as cost advantages.

In a preferred embodiment according to the invention the interjoining of the base element with the docking element, and the interjoining of the securing element with the holding element, is done by an automated structure such as a robot arm. This is a particularly advanced feature since the automated structure is capable of faster assembly of the before mentioned interjoins than it would be possible by hand. Moreover, this allows a saver assemblance of the parts since no worker needs to be near potentially dangerous parts such as the welding torch, a sharp-edge, hot, or heavy workpiece.

In doing so, the risk for workers to get injured is minimized, and the quality of the work can be improved due to a more consistent work manner, of which an automated structure is capable. Moreover, time and money are saved due to the capability of an arm to work without breaks. Those advantages are understood as an addition to the advantages described above that come from the use of additive manufacturing processes to make the fixture.

Each of the above-mentioned embodiments is a non-limiting example of the idea underlying the invention and can be combined with one another.

An advantageous measure for executing the method according to the invention is that the information for the control of the automated structure by a control device. The control device is provided by a sensor device which comprises at least one sensor unit. Especially the interaction of the control device, the sensor device, and the automated structure ensure that the probability of damage to the workpiece or the fixing arrangement drops significantly. The reason being that the control device controls the automated structure after receiving information from the sensor device. In such manner that the force applied to fixing arrangement or parts thereof is adapted to the current work progress. The same applies for the time and space where the welding device affects the workpiece or other pieces of the fixing arrangement. At least one sensor unit transfers the information to the sensor device which in the case of more than one sensor unit processes the information of all sensor units and provides the whole information to the control device.

In some embodiment of the method according to the invention, the sensor unit can be a vision system, a force sensor, or a multitude of them. The sensor unit can be arranged at the impact device, at the mounting device, and/or in the immediate vicinity of the devices. It is also possible that sensor units are arranged at all mentioned places. In particular the sensor unit can measure at least one of the group comprising the work progress. The position of the automated structure, the position of the welding device, the position of the workpiece, the position of the fixing arrangement, or parts thereof, the wear of the welding device, a possible damage of the welding device, the fixing arrangement or parts thereof, the type of the welding device which is actually used, the force applied on the fixing arrangement or parts thereof, the wear and/or a possible damage of the fixing arrangement or parts thereof, or any other suitable measurable variable for the execution of the method may be checked with the sensor unit.

It is also possible for different sensor units to be configured with different sensor systems. For example, one sensor unit configured as a vision system is arranged near the fixing arrangement to observe the work progress. A second sensor unit configured as a force sensor is attached to the impact unit to measure the impact force on the fixing arrangement.

Furthermore, a method for manufacturing a fixture according to the invention is disclosed, characterized in, that the fixture is made by an additive manufacturing.

In an advantageous embodiment of the method for manufacturing a fixture according to the invention the additive manufacturing process used are Fused Deposition Modeling (FDM), and/or Stereolithography, and/or Binder Jetting, and/or selective laser melting but not limited to those.

In an advantageous embodiment of the method for manufacturing a fixture according to the invention, wherein the produced fixture comprises a hole, and/or a gap to save on material is made. Another benefit of this is that lighter fixtures can be produced than known from the state of the art.

In an advantageous embodiment of the method for manufacturing a fixture according to the invention is made, wherein different parts of the fixture are made by different additive processes, and/or made of different materials. Thereby, the fixtures provide the required material only at the necessary places saving money and resources.

In an advantageous embodiment of the method for manufacturing a fixture according to the invention, the method is used to repair a broken fixture, to allow a more ecologic and economic consumption of fixtures.

Further advantageous measures and embodiments of the invention result from the dependent claims.

The invention will be explained in more detail in the following with reference to embodiments and to the drawing. The schematic drawing show, partly in section:
- Fig. 1:: A base element interjoined with a fixture in accordance with the invention;
- Fig. 2:: A fixture with surface A in accordance with the invention;
- Fig. 3:: A fixing arrangement according to the invention;
- Fig. 4 :: Advanced design for a fixing element according to the invention;
- Fig. 5:: An advanced fixture device according to the invention;
- Fig. 6:: An advanced fixture device according to the invention, showing a locating and grounding pin.
The following detailed description according to the invention illustrates by way of example, not by way of limitation, the principles of the disclosure. This description will clearly enable one skilled in the art to make and use the disclosure, describes several embodiments, adaptations, variations, alternatives, and uses of the disclosure. Including what is presently believed to be the best mode of carrying out the disclosure. It should be understood that the drawings are diagrammatic and schematic representations of exemplary embodiments of the disclosure. The inventions are not limiting of the present disclosure, nor are they necessarily drawn to scale.

The novel features which are characteristic of the disclosure, both as to structure, and method of operation thereof. Together with further aims and advantages thereof will be understood from the following description. Considered in connection with the accompanying drawings in which an embodiment of the disclosure is illustrated by way of example. It is to be expressly understood that the drawings are for the purpose of illustration and description only. The drawings are not intended as a definition of the limits of the disclosure.

In the following description the various embodiments of the present disclosure will be described with respect to the enclosed drawings. As required, detailed embodiments of the present disclosure are discussed herein. It is to be understood that the disclosed embodiments are merely exemplary of the embodiments of the disclosure. The disclosure may be embodied in various and alternative forms. The figures are not necessarily to scale, and some features may be exaggerated, or minimized to show details of particular components. Therefore, specific structural and functional details disclosed herein are not to be interpreted as limiting, but merely as a representative basis for teaching one skilled in the art to variously employ the present disclosure.

The particulars shown herein are by way of example and for purposes of illustrative discussion of the embodiments of the present disclosure only. and the embodiments of the disclosure are presented in the cause of providing what is believed to be the most useful, and readily understood description of the principles, and conceptual aspects of the present disclosure. In this regard, no attempt is made to show structural details of the present disclosure in more detail than is necessary for the fundamental understanding of the present disclosure. The description, taken with the drawings, making apparent to those skilled in the art how the forms of the present disclosure may be embodied in practice.

As used herein, the singular forms "a," "an," and "the" include the plural reference unless the context clearly dictates otherwise. For example, reference to "a powder material" would also mean that mixtures of one or more powder materials can be present unless specifically excluded. As used herein, the indefinite article "a" indicates one as well as more than one and does not necessarily limit its referent noun to the singular.

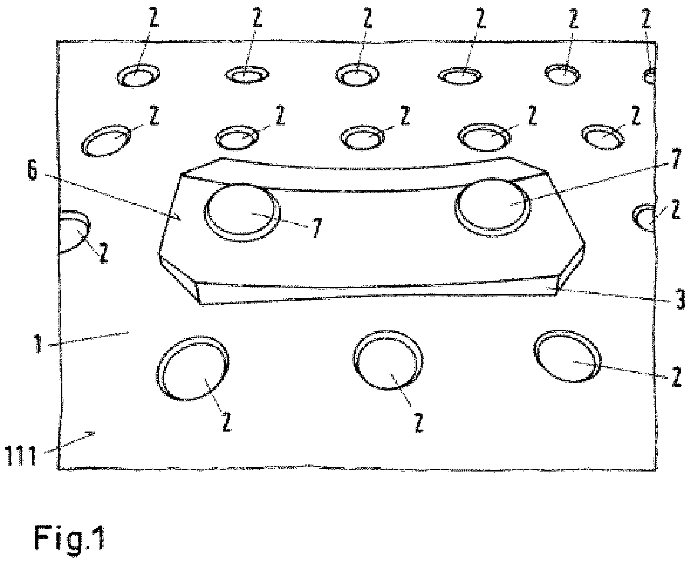

Fig. 1 shows a partly schematic sectional representation of an embodiment of a fixing arrangement for executing the method according to the invention. In this embodiment a base element 1 is provided, with which a fixture 3 is interjoined. The connection is conducted via precision structure 2 on the work surface 111 of the base element, in which a docking element 5 of surface A of the fixture is fitted.

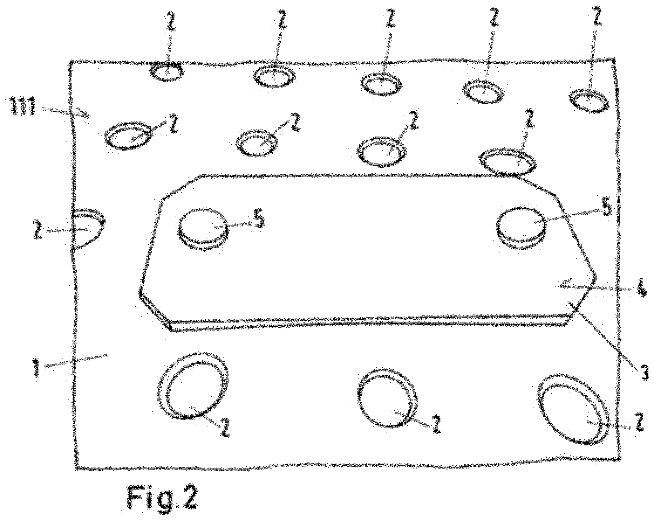

Fig. 2 shows an embodiment of a fixture 3 for use in a method according to the invention. Within Fig. 2 the surface A 4 of the fixture is shown alongside the docking element 5, which is located on the surface A 4. The docking element 5 is interjoined with the precision structure 2 during the conduction of the method of this invention.

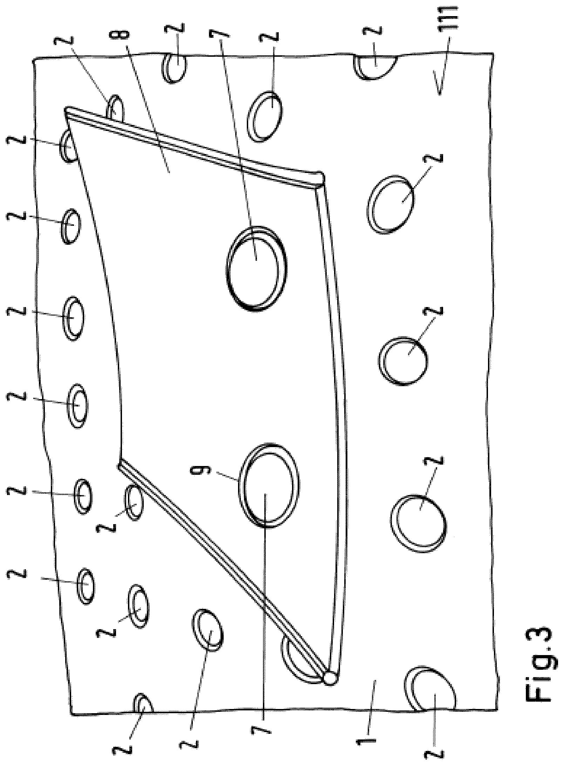

Fig. 3 shows in a partly schematic sectional representation of an embodiment of a fixing arrangement for executing the method according to the invention. In this embodiment a base element 1 is provided, with which a fixture 3 is interjoined. The connection is conducted via precision structure 2 on the work surface 111 of the base element, in which a docking element 5 of surface A of the fixture is fitted.

In the next step, a workpiece 8 is fitted on the securing element 7 of surface B 6 of the fixture 3. The securing element 7 is interjoined with the holding element of workpiece 8 to secure the fitting.

In the next step, the secured workpiece is welded.

It goes without saying, that the welding process can be conducted by manual labor or by an automated structure, such as a robot arm.

It also goes without saying, that the disassembling of the fixing arrangement into its components but especially the disassembling of the workpiece after the welding is thought of in respect of this invention.

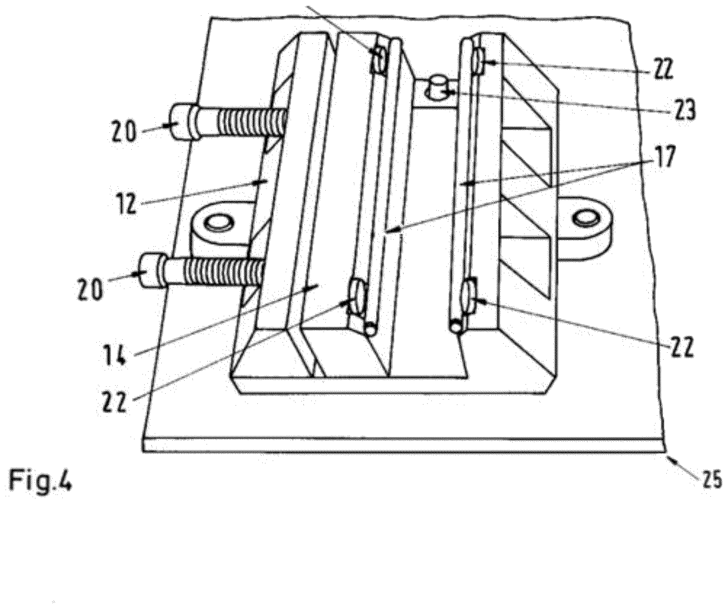

Figure 4 shows a partly schematic sectional representation of an embodiment of a fixing arrangement for executing the method according to the invention. In this embodiment the fixture is a sliding clamp 12.

The figure shows a sliding clamps 12 which is mounted on a plate 25 that in turn is fixedly mounted on the base element 1. The sliding clamp 12 shows a stationary bracket 13 and a sliding bracket 14. Both, the sliding bracket 14 and the stationary bracket 13 comprise a clamp surface 15. The sliding bracket 14 is movable towards the clamp surface 15 of the stationary bracket 13 by the means of the drive element 20. The drive element 20 is a screw, inserted into an insert 19 of the sliding clamp, through which it drives the sliding bracket 14. The sliding bracket 14 has a surface facing the screws and a surface facing the stationary bracket 13. A protecting patch 18 protects the sliding bracket from wear induced by the drive element 20 at the point where the drive element 20 transmits its power.

The side of the sliding bracket 14 facing the stationary brackets clamp surface 15 is the clamp surface 15 of sliding bracket 13. The surface of the stationary bracket 13 that faces the sliding brackets clamp surface 15 is also called clamp surface 15. Clamp surfaces 15 possess recesses 21 in which magnets 22 are fixed. Those magnets hold the precision pins 17 which in turn are used to hold the workpiece 8. Between the clamping surfaces 15 is a locating pin 23 to provide grounding. Additionally, the locating pin is used to locate the workpiece and ensure the precise fixing of the workpiece in the sliding clamp 12.

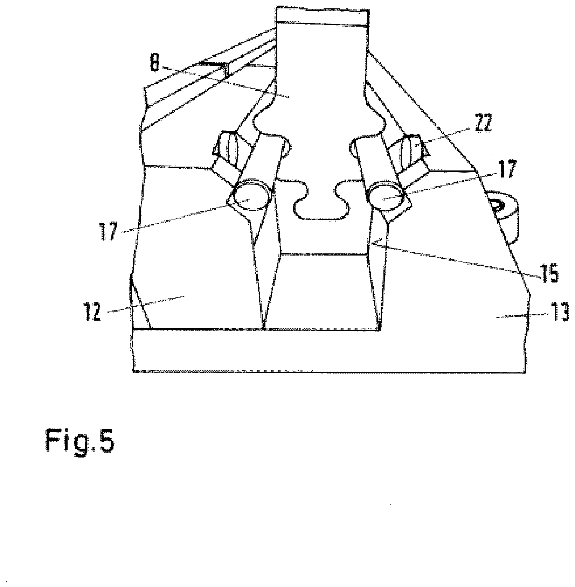

Figure 5 shows in a partly schematic sectional representation an embodiment of a sliding clamp according to the invention. Figure 5 shows the sliding clamp during operation, wherein a workpiece 8 is located between the clamp surface 15 of the sliding bracket 14 and the clamp surface 15 of the stationary bracket 13 and fixed by the precision pins 17.

The precision pins are fixed to the clamping surface 15 of sliding bracket 14 and stationary bracket 13 by the means of the magnets 22, located and fixed in the recesses 21, which are located within both, the sliding bracket 14 and the stationary bracket 13.

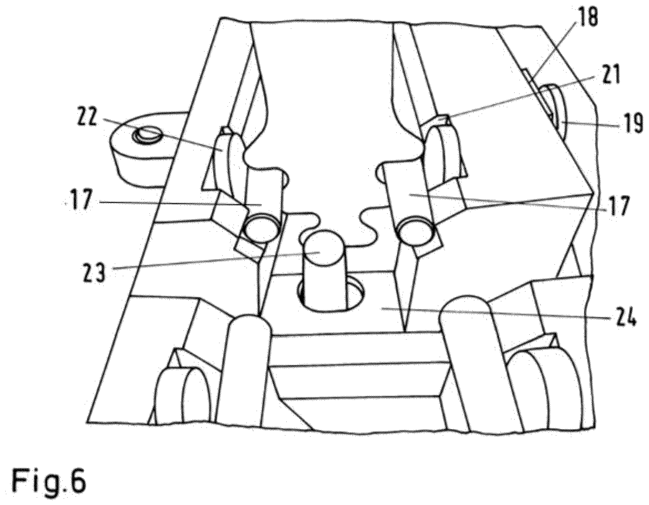

Figure 6 shows a partly schematic sectional representation of the embodiment of the sliding clamp 12, and the position of the locating pin 23.

Figure 6 also shows the sliding clamp during operation, wherein a workpiece 8 is located between the sliding bracket 14 and the clamp surface 15 of the stationary bracket 13 and fixed by the precision pins 17.

Again, the precision pins are fixed to the clamping surface 15 of sliding bracket 14 and stationary bracket 13 by the means of the magnets 22, located and fixed in the recesses 21, which are located within both, the sliding bracket 14 and the stationary bracket 13.

The workpiece 8 is not only held in place by the precision pins 17, but also by the locating pin located between the stationary bracket 13 and the sliding bracket 14. In the embodiment shown in Figure 6, the locating pin is embedded in the bottom of the sliding clamp 24 and prevents movement of the workpiece 8 in direction of the X-axis or Z-axis. Moreover, the locating pins ground the workpiece 8.

The invention provides, for the first time, via the above-described features, amongst others the following improvements:
Additive manufacturing according to the invention can be conducted in less time than for example CNC-milling, without long stand stills of the manufacturing process.

The invention saves resources, such as material due to the use of additive manufacturing instead of subtractive manufacturing, wastes less material, since no more subtractive manufacturing is used, and since at least far less metal is used during the process, which is an extremely energy-consuming material to produce, saves energy.

Additionally, personal know-how from workers can be used more efficiently, as it is no longer required to have several operator operating the same machine. Enabled by automation and less frequent maintenance intervals. Overall, the use of additive manufacturing allows faster production at lower cost.

These effects lead to drastically reduced production costs, which render the entire process more efficient and economically profitable There is also a huge positive impact on the environment due to decreased emissions and a decrease in required resources.

## Claims

1. A method for using a fixing arrangement with a base element (1) for fixing a workpiece (8) in a welding process, comprising the following steps:
- attaching a fixture (3) at a precision structure (2) of a work surface (111) of the base element (1);
- securing the workpiece (8) at the fixing arrangement by means of the fixture (3);
**characterized in, that** the fixture (3) is made by an additive manufacturing process.

2. The method according to claim 1, wherein the fixture (3) comprises a surface A (4) and a docking element (5) for attaching the fixture (3) at the precision structure (5), wherein the docking element (5) is located on the surface A (4), and/or wherein the fixture (3) comprises a surface B (6) and a securing element (7) for attaching the workpiece (8) to the fixture (3), wherein the securing element (7) is located on surface B (6), and/or wherein the workpiece (8) comprises a holding element (9) for holding onto the fixture (3).

3. The method according to any of the preceding claims comprising the following steps:
- Providing a device for fixing a workpiece (8) in a welding process, comprising a base element (1) with a work surface (111), wherein the work surface (111) comprises a precision structure (2), a fixture (3), comprising a surface A (4) with a docking element (5) and a surface B (6) with a securing element (7), and a workpiece (8) comprising a holding element (9),
- interjoining the precision structure (2) of the base element (1) with the docking element (5) of the surface A (4),
- interjoining the securing element (7) of the surface B (6) with the holding element (9) of the workpiece (8), to precisely fix the workpiece (8).

4. The method according to any of the preceding claims, wherein the docking element (5) and/or the securing element (7) is a printed press-fit pin and/or a metal press-fit pin and/or wherein the securing element and/or the docking element (5) comprises a spherical surface (10) and/ or a plane surface (11).

5. The method according to any of the preceding claims, wherein the surface A (4) and the surface B (6) stand at a predeterminable angle to each other, and/or wherein the angle between the surface A (4) und the surface B (6) is between 0 and 360 degrees, preferably between 0 and 270 degrees and especially preferably between 0 and 180 degrees, and/or wherein the angle between the surface A (4) and the surface B (6) varies across the surface A (4) and the surface B (6), and/or wherein the surface A (4) and/or the surface B (6) comprises a spherical surface (10) and/ or a plane surface (11) and/or wherein the fixture (3) is a solid block of material, and/or wherein the fixture (3) is flexible.

6. The method according to any of the preceding claims, wherein the fixture (3) comprises a hole and/or a gap to save on material, and/or wherein the fixture (3) is made of a compound material, and/or wherein the fixture (3) masks a part of the workpiece (8), and/or the welding process is automated.

7. The method according to any of the preceding claims, wherein the connection between the precision structure (2) and the docking element (5) has a clearance between 0.5 and 1 mm, preferably between 0.06 mm and 0.09 mm in diameter, especially preferable between 0.065 mm and 0.085 mm.

8. The method according to any of the preceding claims, wherein the connection between the base element (1) and the fixture (3) and the connection between the fixture (3) and the workpiece (8) are shear resistant, and/or wherein each of the connections between the base element (1), the fixture (3) and the workpiece (8) is reversible, and/or the fixture (3) can be used several times.

9. The method according to any of the preceding claims, wherein the fixture (3) is a sliding clamp (12), comprising a stationary bracket (13) and a sliding bracket (14), wherein the stationary bracket (13) and the sliding bracket (14) each comprise a clamping surface (15), wherein the clamping surfaces (15) are parallel to each other and facing each other, wherein the sliding bracket (14) can be moved along an Axis A (16), wherein axis A (16) is orthogonal to the clamping surfaces (15), and/or wherein the clamping surfaces (15) each comprise a precision pin (17) to fix the workpiece (8).

10. A device for executing the method in accordance with claim 1-9, comprising a fixture (3), a base element (1) with a work surface (111), wherein the work surface (111) comprises a precision structure (2), wherein the precision structure (2) of the base element (1) can be interjoined with the fixture (3) and a workpiece (8) can be arranged at the device by means of the fixture (3), **characterized in that** the fixture (3) is made by an additive manufacturing process.

11. The device for executing the method in accordance with claim 10, wherein the fixture (3) comprises a surface A (4) and a docking element (5) for attaching the fixture (3) at the precision structure (2), wherein the docking element (5) is located on the surface A (6), and/or wherein the fixture (3) comprises a surface B (6) and a securing element (7) for attaching the workpiece (8) to the fixture (3), wherein the securing element (7) is located on the surface B (6), and/or wherein the workpiece (8) comprises a holding element (9) for holding onto the fixture (3).

12. A fixture (3) for a device according to claim 10 or 11, for performing a method according to claim 1-13, **characterized in that** the fixture (3) is made by an additive manufacturing process.

13. The fixture (3) according to claim 12, wherein the fixture (3) comprises a surface A (4) and a docking element (5) for attaching the fixture (3) at the precision structure (2), wherein the docking element (5) is located on surface A (4), and/or wherein the fixture (3) comprises a surface B (6) and a securing element (7) for attaching the workpiece (8) to the fixture (3), wherein the securing element (7) is located on surface B (6), and/or, wherein in a welding process a workpiece (8), comprising a holding element (9) can be interjoined with the securing element (7) of the surface B (6), to precisely fix the workpiece (8), and/or wherein the securing element (7) and/or the docking element (5) is a printed press-fit pin or a metal press-fit pin, and/or wherein the securing element and/or the docking element (5) comprises a spherical surface (10) and/ or a plane surface (11).

14. The fixture (3) according to one of the claims 12 or 13, wherein the surface A (4) and the surface B (6) stand at a predeterminable angle to each other, and/or wherein the angle between the surface A (4) und the surface B (6) is between 0 and 360 degrees, preferably between 0 and 270 degrees and especially preferably between 0 and 180 degrees, and/or wherein the angle between the surface A (4) and the surface B (6) varies across the surface A (4) and the surface B (6), and/or wherein the surface B (6) and/or the surface A (4) comprises a spherical surface (10) and/or a plane surface (11), and/or wherein the fixture (3) is a solid block of material, and/or wherein the fixture (3) is flexible, and/or wherein the fixture (3) comprises a hole and/or a gap to save on material, and/or wherein the fixture (3) is made of a compound material, and/or masks a part of the workpiece (8).

15. A method for manufacturing a fixture (3) according to any of the claims 12-14, **characterized in, that** the fixture (3) is made by an additive manufacturing.

16. The method for manufacturing a fixture (3) according to claim 15, wherein the additive manufacturing process used are Fused Deposition Modeling (FDM), and/or Stereolithography, and/or Binder Jetting, and/or Selective Laser Melting and/or wherein the produced fixture (3) comprises a hole and/or a gap to save on material, and/or wherein different parts of the fixture (3) are made by different additive processes and/or made of different materials, and/or wherein the method is a method for repairing fixture (3).
